# EUROPÄISCHE PATENTSCHRIFT

(11) **EP 3 805 990 B1**
(45) Veröffentlichungstag und Bekanntmachung des Hinweises auf die Patenterteilung: **18.09.2024**
(21) Anmeldenummer: 20200992.4
(22) Anmeldetag: 09.10.2020
(51) Int. Cl.: H01R 43/048

(54) **KENNZEICHNUNGSELEMENT, VERARBEITUNGSSYSTEM SOWIE VERFAHREN**
IDENTIFICATION ELEMENT, PROCESSING SYSTEM AND METHOD
ÉLÉMENT DE REPÉRAGE, SYSTÈME DE TRAITEMENT AINSI PROCÉDÉ

(30) Priorität: 11.10.2019 DE 102019215642
(43) Veröffentlichungstag der Anmeldung: 14.04.2021
(73) Patentinhaber: Schäfer Werkzeug- und Sondermaschinenbau GmbH, 76669 Bad Schönborn-Langenbrücken (DE)
(72) Erfinder: Schäfer, Alexander, 76669 Bad Schönborn-Langenbrücken (DE)
(74) Vertreter: Hoffmann Eitle

(56) Entgegenhaltungen:
- EP-A1- 0 600 415
- EP-B1- 0 873 582
- WO-A1-2014/188164
- CN-A- 109 583 559
- DE-A1- 102016 103 694
- KR-Y1- 200 462 233
- US-A1- 2015 229 039
- US-A1- 2016 016 222

## Beschreibung

### Technisches Gebiet

Die Erfindung betrifft ein Verarbeitungssystem mit mindestens einer Bearbeitungszelle, insbesondere einer Bearbeitungszelle zur Bearbeitung von elektrischen oder optischen Leitungen. Eine oder mehrere der Bearbeitungszellen können eine Bearbeitungseinheit zur Verbindung einer Leitung mit einem Kontaktbauteil aufweisen, insbesondere eine Crimpvorrichtung. Ferner betrifft die Erfindung ein Verfahren.

### Stand der Technik

Die Anforderungen an die Fertigung von mit Kontaktelementen zu versehenden elektrischen Leitungen steigen in den letzten Jahren stetig an. Ein treibender Faktor hierbei ist unter anderem die zunehmende Elektrifizierung im Bereich der Automobilindustrie, die zu einer Vielfalt unterschiedlich ausgestalteter Leitungen mit entsprechenden Kontaktelementen führt. Bedingt durch die zunehmende Variantenvielfalt wird auch bei "Losgröße 1" ein gesteigertes Maß an die Flexibilität der Fertigung gestellt, wobei gleichzeitig ein hohes Qualitätsniveau sichergestellt werden soll.

Dies kann dazu führen, dass unterschiedlich ausgestaltete Leitungen in verschiedenen Bearbeitungszellen bearbeitet werden, beispielsweise wenn bei laufender Fertigung eine Leitung in einer Sonderform bearbeitet werden soll. Die Bearbeitungs- oder Fertigungsanlage, in der die Bearbeitungszellen vorgesehen sind, soll deshalb eine hohe Flexibilität erlauben, indem eine Übergabe einer Leitung zu einer bestimmten Bearbeitungszelle gewährleistet wird. Somit werden neue Strategien erforderlich, um ein flexibles und präzises Zuführen der Leitung zu bestimmten Bearbeitungszellen sicherzustellen.

Aus der EP 1 837 622 A1 ist ein Verfahren und eine Einrichtung zur Bestimmung der geometrischen Daten einer Kabelbestückung bekannt. Bei diesem Verfahren wird eine berührungslose Abtastung einer Kabelbestückung mittels eines ersten und zweiten Distanzsensors durchgeführt. Der erste Distanzsensor ist dafür vorgesehen, die Kabelbestückung bzw. einen Leitercrimp des Crimpkontakts von unten vielfach berührungslos abzutasten. Der zweite Distanzsensor ist dafür vorgesehen, den Leitercrimp des Crimpkontakts von oben abzutasten. Aus den Messwerten mit den zugehörigen Koordinaten werden geometrische Daten der Kabelbestückung bestimmt.

Aus einem anderen technischen Gebiet ist die DE 10 2016 103 694 A1 bekannt, die ein Sicherheitsdokument mit einem ersten Sicherheitselement, welches eine visuell erkennbare und insbesondere maschinenlesbare erste Information umfasst, und einem zweiten Sicherheitselement, welches eine insbesondere maschinenlesbare zweite Information umfasst, betrifft.

Ferner ist die WO 2014/188164 A1 bekannt.

Die Veröffentlichung US 2016/0016222 A1 zeigt eine Hand-Presseinrichtung zum Verbinden von zwei Werkstücken, insbesondere eines Rohrs und einer Presspassung. Die Hand-Presseinrichtung umfasst ein Presswerkzeug mit mehreren Pressbacken.

In der WO 97/25757 A1 wird ein tragbares Werkzeug zum Crimpen von Kontaktanschlüssen auf elektrische Leiter.

Eine automatische Crimpvorrichtung wird in der Anmeldung EP 0 600 415 A1 beschrieben, die eine Kabelschneidstation, eine Markierpositionierstation, eine Markierortdrehstation, eine Abstreifstation und eine Anschlusscrimpstation umfasst.

In der Veröffentlichung US 2015/0229039 A1 wird eine isolierte Kabelanschluss-Verbindungsstruktur beschrieben.

### Gegenstand der Erfindung

Ziel der Erfindung ist es, ein Verarbeitungssystem mit einem Kennzeichnungselement bereitzustellen, das eine hohe Flexibilität bei Beibehaltung oder Verbesserung des Qualitätsniveaus in der Fertigung ermöglicht.

Der Gegenstand des Anspruchs 1 stellt ein entsprechendes Verarbeitungssystem bereit. Weitere bevorzugte Ausführungsformen sind in den abhängigen Ansprüchen aufgeführt. Ferner betrifft die Erfindung ein Verfahren, welches insbesondere das Kennzeichnungselement gemäß einer der nachfolgend beschriebenen Ausgestaltungen verwendet.

Einer der Vorteile des Kennzeichnungselements des erfindungsgemäßen Verarbeitungssystems ist es, dass eine präzise Verknüpfung von relativ zueinander bewegbaren Einheiten ermöglicht wird. Mittels eines manuellen und/oder computergesteuerten Einjustierens kann das Kennzeichnungselement eine Interaktion zwischen einer Handhabungseinheit und einer Bearbeitungszelle vergleichsweise schnell und effizient bereitstellen, so dass eine hochgenaue Ausrichtung einer von der Handhabungseinheit aufgenommenen Komponente relativ zur Bearbeitungszelle ermöglicht wird.

Zu verarbeitende Gegenstände, wie eine Leitung bzw. das Kontaktbauteil, werden auch als "Komponente" bezeichnet. Auch können als zu verarbeitende Komponenten z.B. Schirmgehäuse, Platinen, Kontakte, Stecker und Steckverbinder oder ähnliche Bauteile mit solchen Teileinheiten zueinander verbunden werden. Des Weiteren könnten einzelne oder mehrere angecrimpte Bauteile, z.B. Kontakte, lagerichtig und genau positioniert werden. Diese Positionierung wird zur weiteren Verarbeitung und/oder zum Fügen in/an andere Komponenten / Bauteile benötigt. Die im Zuge der Bearbeitung durchgeführten Schritte sind insbesondere ausgewählt aus einem Zusammensetzen, Fügen, Verbinden, Bewegen und Positionieren.

Ein weiterer Vorteil liegt darin, dass das Verarbeitungssystem, welches das Kennzeichnungselement einsetzt, entsprechend den konkreten Anforderungen erweitert oder eine der Bearbeitungszellen oder eine Bearbeitungseinheit einer solchen Bearbeitungszelle mit vergleichsweise geringem Aufwand ausgetauscht werden kann. Die Handhabungseinheit zum Transport einer Komponente kann mit der zusätzlichen oder ersetzten Bearbeitungszelle präzise interagieren, so dass eine hohe und gleichbleibende Fertigungsqualität sichergestellt wird.

Ferner kann ein Kennzeichnungselement bereitgestellt werden, das beispielsweise ein kartesisches 3D-Koordinatensystem abbildet. Dies könnte beispielsweise mittels 3D-Punkten in Form von hochgenauen Stahlkugeln, Pins, Durchgangsbohrungen oder dergleichen umgesetzt werden. Ferner kann ein Grafikelement, wie ein QR-Code, Anwendung finden.

Anhand des zuvor genannten Koordinatensystems können diverse Bearbeitungspositionen in einer Speichereinrichtung der Bearbeitungszelle genau definiert werden, beispielsweise als Raumvektor oder als weitere Koordinatensysteme. Das Koordinatensystem sowie die damit verbundenen Bearbeitungspositionen können in der Speichereinrichtung der Bearbeitungszelle oder einer zentralen Speichereinrichtung hinterlegt sein. Auf dieser Grundlage kann ein Handhabungssystem schnell und exakt die entsprechenden Dimensionen und möglichen Kollisionskonturen der Bearbeitungszelle übernehmen oder Einlernen.

Die zentrale oder dezentrale Speichereinrichtung kann eine Datenbank umfassen, auf deren Werte oder Daten über das Informationsträgerelement zugegriffen/ verwiesen wird.

Das Kennzeichnungselement kombiniert dabei somit ein Markierelement, welches ein Koordinatensystem definiert, mit einem Informationsträgerelement. Das Informationsträgerelement kann beispielsweise als Barcode, QR-Code oder einen mittels Radiowellen arbeitenden Chip (RFID-Chip) ausgebildet sein. Das Informationsträgerelement enthält für eine bestimmte Bearbeitungszelle weiterführende Informationen, die beispielsweise zur Beschreibung eines lokalen Koordinatensystems verwendet werden oder Informationen zu bestimmten Gegebenheiten der Bearbeitungszelle enthalten. Ferner kann mittels der durch das Informationsträgerelement bereitgestellten Information auf ein weiteres Kennzeichnungselement verwiesen werden.

Alternativ oder zusätzlich zur Bereitstellung der Information durch das Informationsträgerelement selbst kann das Informationsträgerelement auf diese Informationen verweisen, insbesondere auf eine bestimmte Datei oder eine in einer Datenbank hinterlegte Information.

Die Kombination aus Markierelement und Informationsträgerelement hat den Vorteil, dass der erfassbare und für einen Verarbeitungsvorgang verwendbare Informationsgehalt deutlich gesteigert werden kann. Gleichzeitig erhöht die Möglichkeit, beispielsweise das Informationsträgerelement nachträglich zu tauschen, die Flexibilität des Systems.

Die Erfindung stellt ein Verarbeitungssystem bereit, das eine erste Bearbeitungszelle und eine zweite Bearbeitungszelle zur Verarbeitung einer Komponente sowie eine Handhabungseinheit und eine Erfassungseinheit, insbesondere eine Kamera, aufweist. Die Bearbeitungszellen können jeweils eine Bearbeitungseinrichtung, wie eine Crimpvorrichtung oder eine Vorrichtung zur Konfektionierung von elektrischen und/oder optischen Leitern und/oder Kombinationen von Leitern und/oder kabelähnlichen Komponenten, umfassen.

Dabei ist es vorgesehen, dass die erste und zweite Bearbeitungszelle jeweils mit einem Kennzeichnungselement versehen sind. Alternativ oder zusätzlich kann eine Bearbeitungseinrichtung der Bearbeitungszelle mit einem Kennzeichnungselement versehen sein. Somit können in einem Verarbeitungssystem die Bearbeitungszellen in vorteilhafter Weise mit weiterführenden Informationen versehen werden.

Die Kennzeichnungselemente sind mittels einer Erfassungseinheit einer Handhabungseinheit erfassbar. Die Kennzeichnungselemente umfassen: ein Markierelement, wobei das Markierelement ein lokales Koordinatensystem definiert, und ein Informationsträgerelement, das Informationen zu einer Bearbeitungszelle und/oder Bearbeitungseinrichtung einer Bearbeitungszelle enthält und/oder eine Verknüpfung hierfür bereitstellt. Insbesondere kann das Informationsträgerelement selbst als Speicher dienen oder auf Daten in einem Speicher verweisen.

Dabei ist es bevorzugt, dass das Markierelement ein kartesisches Koordinatensystem bereitstellt. Das durch das Markierelement bereitgestellte kartesische Koordinatensystem kann somit als lokales Koordinatensystem bei der Steuerung von Bewegungen einer Handhabungseinheit verwendet werden.

In einer Ausführungsform umfasst das Markierelement eine Vielzahl an Punktelementen.

Die Punktelemente können in einer Ausführungsform entlang zweier imaginärer Linien angeordnet sein. Auf diese Weise wird mit den Punktelementen (beziehungsweise den durch die Punktelemente definierten imaginären Linien) eine zweidimensionale Ebene aufgespannt. Dabei ist es ferner bevorzugt, dass die imaginären Linien im Wesentlichen senkrecht zueinander verlaufen. Im Schnittpunkt der imaginären Linien kann eine weitere (imaginäre) Senkrechte angeordnet sein, so dass in Kombination mit den bereits genannten zwei imaginären Linien ein dreidimensionales Koordinatensystem aufgespannt wird.

Durch diese Anordnung der Punktelemente, die insbesondere ausgefüllte Kreisflächen sein können, sowie die Größe der Punktelemente (bevorzugt Kreisflächen), wird es möglich, die Position der Bearbeitungszelle oder Bearbeitungseinrichtung in einem X,Y,Z-Koordinatensystem mit relativ hoher Genauigkeit zu bestimmen.

Die kreisrunde Ausgestaltung der Punktelemente stellt dabei sicher, dass aus einem von den Punktelementen aufgenommenen Bild eine Ebene relativ genau detektiert werden kann. Allerdings können auch andere Ausgestaltungen der Punktelemente hierfür herangezogen werden.

Es ist bevorzugt, dass die Punktelemente kreisförmig ausgebildet sind. Durch diese Ausgestaltung der Punktelement wird ein äußert hohes Maß an Genauigkeit für die Definition eines Koordinatensystems mittels der kreisförmigen Punktelement ermöglicht.

Dabei kann es ferner vorgesehen sein, dass die kreisförmigen Punktelemente im Wesentlichen den gleichen Durchmesser aufweisen. Dies vereinfacht die entsprechenden Berechnungsschritte.

In einer weiteren Ausführungsform sind die Punktelemente oval, rechteckig, quadratisch oder dergleichen ausgebildet.

Es ist gemäß einer anderen Ausführungsform vorgesehen, dass das Markierelement ausgewählt ist aus einer oder mehreren Kugeln, einem oder mehreren Stiften oder einer oder mehreren Bohrungen.

Es ist bevorzugt, dass das Informationsträgerelement als QR-Code, RFID-Chip oder Barcode ausgebildet ist. Ein RFID-Chip hat den Vorteil, dass das Informationsträgerelement selbst eine Speichereinheit aufweist, in der relativ umfangreiche Informationen abgelegt sein können. Ein Barcode ist durch eine optisch arbeitende Erfassungseinrichtung sicher detektierbar. Ein QR-Code zeichnet sich im vorliegenden Anwendungsgebiet dadurch aus, dass eine relativ hohe Informationsdichte bereitgestellt werden kann.

In einer Ausführungsform ist es vorgesehen, dass das Kennzeichnungselement als Etikett ausgebildet ist. Ein solches Etikett kann an einer Bearbeitungszelle oder Bearbeitungseinrichtung angebracht und im Bedarfsfall ohne größeren Aufwand ausgetauscht werden.

Es ist ferner bevorzugt, dass sich das Markierelement derart erstreckt, dass das Markierelement das Informationsträgerelement an zumindest zwei Seiten des Informationsträgerelements einfasst.

Auf diese Weise können mit einer Kamera-Aufnahme, insbesondere mit einem Bildbereich, alle Daten erfasst werden. Auch wird eine relativ hohe Genauigkeit ermöglicht.

Dabei ist es ferner besonders bevorzugt, dass das Markierelement das Informationsträgerelement vollständig einfasst.

Es ist ferner bevorzugt, dass die Erfassungseinheit, insbesondere Kamera, an der Handhabungseinheit angebracht ist und die durch die Kennzeichnungselemente bereitgestellten Informationen auslesen kann.

In einer Ausführungsform des Verarbeitungssystems ist es vorgesehen, dass die erste Bearbeitungszelle eine wechselbare Bearbeitungseinrichtung aufweist, wobei ein Kennzeichnungselement ebenfalls an der auswechselbaren Bearbeitungseinheit angebracht ist. Somit ist die durch das Kennzeichnungselement bereitgestellte Information mit der Bearbeitungseinrichtung verknüpft, auch wenn die Bearbeitungseinrichtung ausgetauscht oder umgestellt und ggf. zu einem späteren Zeitpunkt wiederverwendet wird.

Es ist bevorzugt, dass das Kennzeichnungselement einen Nullpunkt als eine auslesbare Information zu einem Koordinatensystem im Raum bereitstellt, wobei bevorzugt ist, dass auf der Basis des Koordinatensystems eine Hüll-/ Kollisionskontur eines Bearbeitungsmoduls und/oder eine oder mehrere Bearbeitungs-/ Anfahrpositionen innerhalb dieses Bearbeitungsmoduls definiert wird/werden.

Insbesondere ist es vorgesehen, dass das Kennzeichnungselement Informationen (beispielsweise eines Vektors) zum Anfahr-Wegfahrweg sowie der einer Bewegung der Manipulationseinheit beinhaltet. Dadurch kann z.B. eine definierte, schräge Fahrbewegung von z.B. seitlich in einer Richtung, erfolgen.

Es ist insbesondere vorgesehen, dass die Bearbeitungszelle eine Bearbeitungseinrichtung zur Kabel- und/oder Kontaktverarbeitung, insbesondere eine Crimpvorrichtung, umfasst.

Ferner kann es vorgesehen sein, dass die Bearbeitungszelle mehrere Kennzeichnungselemente aufweist. Insbesondere kann ein erstes Kennzeichnungselement an einem Tisch oder einer Konsole der Bearbeitungszelle vorgesehen sein. Ein zweites Kennzeichnungselement ist beispielsweise an einer Bearbeitungseinrichtung angebracht. Dabei kann das erste Kennzeichnungselement als eine Information einen Verweis auf das zweite Kennzeichnungselement umfassen.

Die Erfindung betrifft darüber hinaus ein Verfahren, im Rahmen dessen das Verarbeitungssystem gemäß einem der zuvor genannten Aspekte zum Einsatz kommt.

### Kurze Beschreibung der Zeichnung

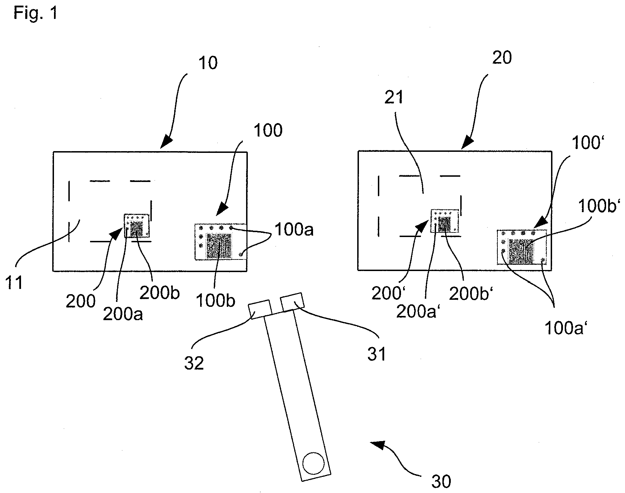

- Fig. 1: ist eine schematische Darstellung zur Veranschaulichung eines erfindungsgemäßen Systems.

### Detaillierte Beschreibung der bevorzugten Ausführungsform

Anhand der Figur wird eine bevorzugte Ausführungsform der Erfindung beschrieben. Obwohl die Ausführungsform rein beispielhaft, und nicht einschränkend, zu verstehen ist, können Einzelmerkmale der Ausführungsform zur Spezifizierung der Erfindung herangezogen werden. Ferner können Modifikationen der nachfolgend beschriebenen Ausführungsform jeweils einzeln miteinander kombiniert werden, um weitere Ausführungsformen der Erfindung auszubilden.

Fig. 1 zeigt eine schematische Draufsicht einer Bearbeitungsanlage, die zur Verarbeitung von elektrischen Leitungen (als einem Beispiel einer Komponente) eingesetzt wird. Anhand der Bearbeitungsanlage soll der mögliche Einsatz des erfindungsgemäßen Kennzeichnungselement 100 anschaulich erläutert werden.

Die Bearbeitungsanlage kann beispielsweise in einem Gebäude, wie einer Werkshalle, angeordnet und kann mit einer Absperrung oder Umzäunung gegen unberechtigtes Eindringen in die Bearbeitungsanlage gesichert sein. Gemäß einer anderen Ausführungsform kann einem Arbeiter auch Zugang zur Bearbeitungsanlage gewährt werden. Hierfür sind beispielsweise Sensoren an Bearbeitungszellen oder einer bewegbaren Handhabungseinheit angebracht, um die Sicherheit des Arbeiters in der Bearbeitungsanlage zu gewährleisten. Derartige Sensoren können berührungslos arbeiten oder die Sensoren können als taktile Sensoren ausgebildet sein. Hierbei ist es möglich, dass die Bearbeitungsanlage auch ohne Einhausung betrieben wird.

In der Bearbeitungsanlage sind eine erste Bearbeitungszelle 10 und eine zweite Bearbeitungszelle 20 angeordnet. Die Bearbeitungszellen umfassen Bearbeitungseinrichtungen 11, 21, beispielsweise Crimpvorrichtungen, mit denen Leitungen mit einem Kontaktelement/ Crimpkontakt versehen werden. Die Anzahl der Bearbeitungszellen oder anderer, in der Figur nicht dargestellten Einheiten der Bearbeitungsanlage kann entsprechend den konkreten Anforderungen gewählt werden.

Die Bearbeitungsanlage umfasst eine bewegbare Handhabungseinheit 30, die im vorliegenden Ausführungsbeispiel als schwenkbarer Roboterarm ausgebildet ist.

Die Handhabungseinheit 30 verfügt über eine visuelle Erfassungseinheit 32, insbesondere eine 2D- und/oder 3D-Kamera, mit der das Kennzeichnungselement sowie ggf. eine Leitung, ein Kontaktbauteil (beispielsweise Crimpkontakt) oder Ähnliches erfasst werden können.

Ferner ist die Handhabungseinheit 30 mit einer Manipulationseinheit 31 versehen, mit der Komponenten, insbesondere Leitungen und/der Kontaktteile, gegriffen und im Aktionsradius der Manipulationseinheit 31 bewegt werden können. Beispielsweise ist die Manipulationseinheit 31 als Greifer ausgebildet, der Greifbacken umfasst, mit denen eine Leitung gegriffen werden kann.

Die Handhabungseinheit 30 kann in einer Schwenkbewegung (oder einer Kombination aus translatorischer Bewegung und Schwenkbewegung) zwischen der ersten und zweiten Bearbeitungszelle 10, 20 oder anderen Bereichen der Bearbeitungsanlage bewegt werden. Somit kann die Handhabungseinheit 30 beispielsweise eine Leitung von der ersten Bearbeitungszelle 10 aufnehmen und für einen weiteren Bearbeitungsschritt an die zweite Bearbeitungszelle übergeben.

Um die Präzision der Interaktion der Manipulationseinheit 31 der Handhabungseinheit 30 mit den Bearbeitungszellen 10, 20 der Bearbeitungsanlage zu erhöhen, umfassen die Bearbeitungszellen 10, 20 jeweils ein erfindungsgemäßes Kennzeichnungselement 100, 100`.

Das erste Kennzeichnungselement 100 kann als Etikett oder als gedruckter Abschnitt ausgebildet sein und umfasst ein Markierelement 100a und ein Informationsträgerelement 100b, die dem durch das erste Kennzeichnungselement 100 definierten Bereich benachbart zueinander angeordnet sind.

Alternativ kann es vorgesehen sein, dass ein zweiter, nachgeschalteter Scan durchgeführt wird, zum Beispiel in einem gleichen definierten Abstand deutlich außerhalb des Kennzeichnungselement 100.

Das an der zweiten Bearbeitungszelle 20 vorgesehene zweite Kennzeichnungselement 100' kann ebenso als Etikett oder als gedruckter Abschnitt ausgebildet sein. Das zweite Kennzeichnungselement 100' umfasst ein Markierelement 100a' und ein Informationsträgerelement 100b', die dem durch das zweite Kennzeichnungselement 100' definierten Bereich benachbart zueinander angeordnet sind.

Alternativ kann es vorgesehen sein, dass ein zweiter, nachgeschalteter Scan durchgeführt wird, zum Beispiel in einem gleichen definierten Abstand deutlich außerhalb des Kennzeichnungselement 100'.

Das Markierelement 100a, 100a'wird im Ausführungsbeispiel durch eine Anzahl von kreisförmigen Punktelementen ausgebildet, die in einer bestimmten Anordnung und in einem jeweils zueinander bestimmten Abstand angeordnet sind. Auf Insbesondere erstrecken sich einige der Punktelemente entlang zweier imaginärer Linien, wobei die imaginären Linien im Wesentlichen senkrecht zueinander verlaufen. Somit sind die Punktelemente des Markierelements 100a, 100a'an zwei Seiten des als QR-Code ausgebildeten Informationsträgerelements 100b, 100b' angeordnet.

Durch die imaginären Linien wird eine zweidimensionale Ebene aufgespannt oder definiert. Im Schnittpunkt der imaginären Linien kann eine weitere (imaginäre) senkrechte Linie angeordnet sein, so dass in Kombination mit den bereits genannten zwei imaginären Linien ein dreidimensionales Koordinatensystem aufgespannt wird.

Durch diese Anordnung der Punktelemente, die im Ausführungsbeispiel ausgefüllte Kreisflächen sind, sowie die Größe der Punktelemente (bevorzugt Kreisflächen), wird es möglich, die Position der Bearbeitungszelle oder Bearbeitungseinrichtung in einem X,Y,Z-Koordinantensystem mit relativ hoher Genauigkeit zu bestimmen.

Die kreisrunde Ausgestaltung der Punktelemente stellt dabei sicher, dass aus einem von den Punktelementen aufgenommenen Bild, das mit der Erfassungseinheit 32 aufgenommen wird, eine Ebene relativ genau detektiert werden kann, da eine Abweichung von der kreisrunden Form in der entsprechenden Aufnahme die relative Ausrichtung der Kamera zur Ebene, in der die Punktelemente angeordnet sind, angibt.

Ferner umfassen die Markierelemente 100a, 100a` ein weiteres Punktelement, das als Referenzpunkt für die übrigen Punktelemente dient (im Ausführungsbeispiel im Kennzeichnungselement 100, 100` rechts unten angeordnet).

Das jeweilige Markierelement 100a, 100a` kann als optisch erfassbares System, wie im Ausführungsbeispiel, oder als taktiles System ausgestaltet sein. Im Fall eines optisch erfassbaren Systems kann dieses berührungslos durch die Erfassungseinheit 32 der Handhabungseinheit 30 erfasst werden.

Das jeweilige Informationsträgerelement 100b, 100b' gewährleistet eine Erkennbarkeit einer bestimmten Bearbeitungszelle durch die Handhabungseinheit 30, so dass auch austauschbare oder innerhalb der Bearbeitungszelle bewegliche Einheiten in der jeweiligen Bearbeitungszelle eingesetzt werden können.

Somit wird es mit dem durch das Markierelement 100a, 100a` bereitgestellten Koordinatensystem möglich, der Manipulationseinheit 31 ein lokales Koordinatensystem für deren Bewegung bereitzustellen, welches im Fall der Interaktion zwischen der Manipulationseinheit 31 und einer Einheit der jeweiligen Baugruppe Anwendung finden kann.

Die Markierelemente 100a, 100a` können von der Erfassungseinheit 32 der Handhabungseinheit 30 erfasst werden, sodass, nachdem die Handhabungseinheit 30 zu einer der Einheiten der Bearbeitungsanlage bewegt wurde, eine digitale Übernahme eines lokalen Koordinatensystems durch die Handhabungseinheit 30 vorgenommen wird. Dies erhöht die Genauigkeit der Bewegung der Manipulationseinheit 31, da dieses entsprechende bei einer bestimmten Manipulationsbewegung an ein lokales Koordinatensystem angepasst ist, also beispielsweise der ersten Bearbeitungszelle 10 oder der zweiten Bearbeitungszelle 20, ausgerichtet und entsprechend bewegt werden kann.

Zusätzlich zu den Markierelementen 100a, 100a` umfassen die Kennzeichnungselemente 100, 100' jeweils ein Informationsträgerelement 100b, 100b'. Im vorliegenden Ausführungsbeispiel ist das erste Informationsträgerelement 100b, in der Draufsicht auf das Markierelement 100a betrachtet, durch das jeweilige Markierelement 100a, 100a` teilweise eingefasst wird.

Entsprechendes gilt für das zweite Informationsträgerelement 100b`, das durch das zweiten Markierelement 20a eingefasst wird. Die entsprechende Anordnung der Informationsträgerelemente 100b, 100b' erleichtert die Erfassung durch die Erfassungseinheit 32 der Handhabungseinheit 30.

Gemäß einem Ausführungsbeispiel sind die Informationsträgerelemente 100b, 100b' als QR-Code ausgebildet, der für die jeweilige Bearbeitungszelle eine weiterführende Information enthält. Hierbei kann es sich beispielsweise um Daten bezüglich bestimmter Räume handeln, in denen eine störungsfreie Bewegung möglich ist. Somit wird bei Auslesen des Markierelements und dabei Erfassung des Informationsträgerelements der Handhabungseinheit eine zusätzliche Information übermittelt, die die Interaktion der Manipulationseinheit 31 mit der jeweiligen Bearbeitungszelle erleichtert oder zu deren zusätzlicher Sicherheit beiträgt.

Ferner kann das Informationsträgerelement 100b, 100b' Informationen bereitstellen, die auf ein weiteres Kennzeichnungselement 200, 200` verweisen. Ein solches weiteres Kennzeichnungselement 200, 200' ist im Ausführungsbeispiel an einer Bearbeitungseinrichtung 11, 21 der jeweiligen Bearbeitungszelle 10, 20 angebracht und ähnlich wie die bereits beschriebenen mit einem Markierelement und einem Informationsträgerelement Kennzeichnungselemente ausgebildet.

Wie die zuvor beschriebenen Kennzeichnungselemente 100, 100` weisen die Kennzeichnungselemente 200, 200` jeweils ein Markierelemente 200a, 200a` und ein Informationsträgerelement 100b, 100b` auf.

Somit kann die Manipulationseinheit 31, geleitet im lokalen Koordinatensystem, anhand der durch das Informationsträgerelement 100b, 100b' bereitgestellten Positions-Information zum weiteren Kennzeichnungselement 200, 200' geführt werden. Nach Erfassen des Weiteren Kennzeichnungselements 200, 200` kann die Bewegung der Manipulationseinheit 32 gesteuert werden.

Da das Informationsträgerelement 100b, 100b' der Kennzeichnungselemente 100, 100` als QR-Code ausgebildet ist, kann dieser relativ einfach ausgetauscht werden, beispielsweise wenn sich bestimmte Randbedingungen der jeweiligen Bearbeitungszelle ändern.

In einem beispielhaften Arbeitsablauf werden zunächst mittels der Erfassungseinheit 32 alle vorliegenden Markierelemente sowie Informationsträgerelemente erfasst. Auf dieser Basis wird dann mittels der Manipulationseinheit 31 der Handhabungseinheit 30 eine Leitung von der ersten Bearbeitungszelle 10 aufgenommen. Hierzu wird zunächst eine Referenzierung anhand des durch das Markierelement 100a bereitgestellten Koordinatensystems und der Erfassungseinheit 32 vorgenommen, so dass die Bewegung der Manipulationseinheit 31 an ein lokales Koordinatensystem der ersten Bearbeitungszelle 10 angepasst ist. Somit kann die Manipulationseinheit 31 die Leitung von der ersten Bearbeitungszelle 10 aufnehmen, wobei die Erfassung der Leitung und die Bewegung der Manipulationseinheit 31 aufeinander abgestimmt sind.

Das erste Informationsträgerelement 100b wurde von der Erfassungseinheit 32 erfasst, um weiterführende Informationen zur Steuerung der Bewegung der Manipulationseinheit 31 übertragenen zu können. Diese Informationen können beispielsweise Positionsdaten eines weiteren Kennzeichnungselements 100 enthalten.

Nachfolgend wird die Handhabungseinheit 30 zur zweiten Bearbeitungszelle 20 bewegt und die Manipulationseinheit 31 beim Erreichen der Zielposition im Bereich der zweiten Bearbeitungszelle 20 anhand des Markierelements 100a` des Kennzeichnungselement 100 an der zweiten Bearbeitungszelle 20 ausgerichtet. Die Manipulationseinheit 31 legt unter Einbeziehung des anhand des Markierelements 100a ermittelten, lokalen Koordinatensystem die Leitung in die zweite Bearbeitungszelle 20 ein, so dass die Leitung in der Bearbeitungseinheit 21 der zweiten Bearbeitungszelle weiterverarbeitet werden kann.

Nachfolgend übernimmt die Handhabungseinheit 30 mithilfe der Manipulationseinheit 31 die Leitung aus der zweiten Bearbeitungszelle 20 und kann die Leitung zu einer Ausförderstation überführen, oder einer weiteren Bearbeitungszelle zuführen.

Alternativ zum beschriebenen Vorgehen kann es auch vorgesehen sein, dass die Manipulationseinheit 31 die Leitung während des Bearbeitungsvorgangs in der ersten und/oder zweiten Bearbeitungszelle hält, während eine bestimmte Bearbeitung durchführt wird.

## Patentansprüche

1. Verarbeitungssystem, umfassend eine erste Bearbeitungszelle (10) und eine zweite Bearbeitungszelle (20) zur Verarbeitung einer Komponente sowie eine Handhabungseinheit (30) und eine Erfassungseinheit (32),
**dadurch gekennzeichnet, dass** die erste und zweite Bearbeitungszelle (10, 20) jeweils mit einem Kennzeichnungselement (100, 100'; 200, 200`) versehen sind, welche Kennzeichnungselemente (100, 100'; 200, 200`) mittels einer Erfassungseinheit (32) der Handhabungseinheit (30) erfassbar sind,
wobei die Kennzeichnungselemente (100, 100'; 200, 200`) ein Markierelement (100a, 100a`; 200a, 200a`), das ein lokales Koordinatensystem definiert, und ein Informationsträgerelement (100b, 100b`; 200b, 200b`), das Informationen zu der ersten oder zweiten Bearbeitungszelle (10, 20) und/oder einer Bearbeitungseinrichtung (11, 21) enthält und/oder eine Verknüpfung hierfür bereitstellt, umfassen.

2. Verarbeitungssystem gemäß Anspruch 1, wobei die Erfassungseinheit (32) eine Kamera ist und an der Handhabungseinheit (30) angebracht ist.

3. Verarbeitungssystem gemäß einem der vorangegangenen Ansprüche, **dadurch gekennzeichnet, dass** die erste Bearbeitungszelle (10) eine wechselbare Bearbeitungseinrichtung (11) aufweist, wobei ein Kennzeichnungselement (200, 200') an der auswechselbaren Bearbeitungseinheit (11) angebracht ist.

4. Verarbeitungssystem gemäß einem der vorangegangenen Ansprüche, **dadurch gekennzeichnet, dass** das Kennzeichnungselement (100, 100'; 200, 200`) einen Nullpunkt als eine auslesbare Information zu einem Koordinatensystem im Raum bereitstellt, wobei bevorzugt ist, dass auf der Basis des Koordinatensystems eine Hüll-/ Kollisionskontur einer Bearbeitungseinrichtung und/oder eine oder mehrere Bearbeitungs-/ Anfahrpositionen innerhalb dieser Bearbeitungseinrichtung definiert wird/werden.

5. Verarbeitungssystem gemäß einem der Ansprüche 1-4, **dadurch gekennzeichnet, dass** die Bearbeitungszelle (10) eine Bearbeitungseinrichtung zur Kabel- und/oder Kontaktverarbeitung, insbesondere eine Crimpvorrichtung oder einer Vorrichtung zur Konfektionierung von elektrischen und/oder optischen Leitern und/oder Kombinationen von Leitern und/oder kabelähnlichen Komponenten, umfasst.

6. Verarbeitungssystem gemäß einem der Ansprüche 1-5, **dadurch gekennzeichnet, dass** die Bearbeitungszelle (10, 20) mehrere Kennzeichnungselemente (100, 100'; 200, 200`) aufweist.

7. Verarbeitungssystem gemäß einem der vorangegangenen Ansprüche, **dadurch gekennzeichnet, dass** das Markierelement (100a, 100a`) ein kartesisches Koordinatensystem bereitstellt.

8. Verarbeitungssystem gemäß einem der vorangegangenen Ansprüche, **dadurch gekennzeichnet, dass** das Markierelement eine Vielzahl an Punktelementen umfasst.

9. Verarbeitungssystem gemäß Anspruch 8, **dadurch gekennzeichnet, dass** die Punktelemente entlang zweier imaginärer Linien angeordnet sind, wobei bevorzugt ist, dass die imaginären Linien im Wesentlichen senkrecht zueinander verlaufen.

10. Verarbeitungssystem gemäß Anspruch 8 oder 9, **dadurch gekennzeichnet, dass** die Punktelemente kreisförmig ausgebildet sind, wobei bevorzugt ist, dass die kreisförmigen Punktelemente im Wesentlichen den gleichen Durchmesser aufweisen.

11. Verarbeitungssystem gemäß einem der vorangegangenen Ansprüche, **dadurch gekennzeichnet, dass** das Markierelement (100a, 100a'; 200, 200') ausgewählt ist aus einer oder mehreren Kugeln, einem oder mehreren Stiften oder einer oder mehreren Bohrungen.

12. Verarbeitungssystem gemäß einem der vorangegangenen Ansprüche, **dadurch gekennzeichnet, dass** das Informationsträgerelement (100b, 100b`; 200b, 200b') als QR-Code, RFID-Chip oder Barcode ausgebildet ist.

13. Verarbeitungssystem gemäß einem der vorangegangenen Ansprüche, **dadurch gekennzeichnet, dass** das Kennzeichnungselement (100, 100') als Etikett ausgebildet ist.

14. Verarbeitungssystem gemäß einem der vorangegangenen Ansprüche, **dadurch gekennzeichnet, dass** sich das Markierelement (100a, 100a`; 200a, 200a') derart erstreckt, dass das Markierelement (100a, 100a`; 200a, 200a') das Informationsträgerelement (100b, 100b`; 200b, 200b') an zumindest zwei Seiten des Informationsträgerelements (100b, 100b`; 200b, 200b`), bevorzugt allen Seiten des Informationsträgerelements (100b, 100b`; 200b, 200b`), einfasst.

15. Verfahren zur Verarbeitung einer Komponente, insbesondere einer elektrischen oder optischen Leitung, unter Einsatz des Verarbeitungssystems gemäß einem der vorangegangenen Ansprüche, umfassend die Schritte:
Erfassen des an der ersten Bearbeitungszelle und/oder einer Bearbeitungseinrichtung hiervon vorgesehenen Kennzeichnungselements (100, 100'; 200, 200`), das ein Markierelement (100a, 100a`) sowie ein Informationsträgerelement (100b, 100b`) umfasst,
Orientieren der Handhabungseinheit (30) anhand eines durch das Markierelement (100a, 100a`) definierten Koordinatensystems und Auslesen einer durch das Informationsträgerelement (100b, 100b`) bereitgestellten Information,
Übergeben der Komponente mittels der Handhabungseinheit (10) an die erste Bearbeitungszelle.

## Claims

1. Processing system comprising a first processing cell (10) and a second processing cell (20) for processing a component as well as a handling unit (30) and a scanning unit (32),
**characterised in that** the first and second processing cells (10, 20) are each provided with an identification element (100, 100'; 200, 200'), which identification elements (100, 100'; 200, 200') can be scanned by means of a scanning unit (32) of the handling unit (30),
wherein the identification elements (100, 100'; 200, 200') comprise a marking element (100a, 100a'; 200a, 200a') which defines a local coordinate system and an information carrier element (100b, 100b'; 200b, 200b') which contains information on the first or second processing cell (10, 20) and/or a processing unit (11, 21) and/or provides a link for this purpose.

2. Processing system according to claim 1, wherein the scanning unit (32) is a camera and is attached to the handling unit (30).

3. Processing system according to one of the preceding claims, **characterised in that** the first processing cell (10) has an interchangeable processing unit (11), wherein an identification element (200, 200') is attached to the interchangeable processing unit (11).

4. Processing system according to one of the preceding claims, **characterised in that** the identification element (100, 100'; 200, 200') provides a zero point as readable information on a coordinate system in space, wherein it is preferred that an envelope/collision contour of a processing unit and/or one or more processing/approach positions within this processing unit are defined on the basis of the coordinate system.

5. Processing system according to one of the claims 1-4, **characterised in that** the processing cell (10) comprises a processing unit for cable and/or contact processing, in particular a crimping device or a device for the assembly of electrical and/or optical conductors and/or combinations of conductors and/or cable-like components.

6. Processing system according to one of the claims 1-5, **characterised in that** the processing cell (10, 20) has several identification elements (100, 100'; 200, 200').

7. Processing system according to one of the preceding claims, **characterised in that** the marking element (100a, 100a') provides a cartesian coordinate system.

8. Processing system according to one of the preceding claims, **characterised in that** the marking element comprises a plurality of point elements.

9. Processing system according to claim 8, **characterised in that** the point elements are arranged along two imaginary lines, wherein it is preferred that the imaginary lines run substantially perpendicular to each other.

10. Processing system according to claim 8 or 9, **characterised in that** the point elements are circular in form, wherein it is preferred that the circular point elements have substantially the same diameter.

11. Processing system according to one of the preceding claims, **characterised in that** the marking element (100a, 100a'; 200, 200') is selected from one or more balls, one or more pins or one or more holes.

12. Processing system according to one of the preceding claims, **characterised in that** the information carrier element (100b, 100b'; 200b, 200b') is in the form of a QR code, RFID chip or barcode.

13. Processing system according to one of the preceding claims, **characterised in that** the identification element (100, 100') is in the form of a label.

14. Processing system according to one of the preceding claims, **characterised in that** the marking element (100a, 100a'; 200a, 200a') extends in such a way that the marking element (100a, 100a'; 200a, 200a') surrounds the information carrier element (100b, 100b'; 200b, 200b') on at least two sides of the information carrier element (100b, 100b'; 200b, 200b'), preferably all sides of the information carrier element (100b, 100b'; 200b, 200b').

15. Method of processing a component, in particular an electrical or optical cable, using the processing system according to one of the preceding claims, comprising the steps:
scanning the identification element (100, 100'; 200, 200') provided on the first processing cell and/or a processing unit thereof, which comprises a marking element (100a, 100a') and an information carrier element (100b, 100b'),
orienting the handling unit (30) on the basis of a coordinate system defined by the marking element (100a, 100a') and reading out information provided by the information carrier element (100b, 100b'),
transferring the component to the first processing cell by means of the handling unit (10).

## Revendications

1. Système de traitement comprenant une première cellule de traitement (10) et une deuxième cellule de traitement (20) pour le traitement d'un composant ainsi qu'une unité de manipulation (30) et une unité de détection (32), **caractérisé en ce que** la première et la deuxième cellule de traitement (10, 20) sont pourvues respectivement d'un élément de repérage (100, 100' ; 200, 200'), lesquels éléments de repérage (100, 100' ; 200, 200') sont aptes à être détectés au moyen d'une unité de détection (32) de l'unité de manipulation (30),
dans lequel les éléments de repérage (100, 100' ; 200, 200') comprennent un élément de marquage (100a, 100a' ; 200a, 200a') qui définit un système de coordonnées local, et un élément porteur d'informations (100b, 100b' ; 200b, 200b') qui contient des informations sur la première ou la deuxième cellule de traitement (10, 20) et/ou un dispositif de traitement (11, 21) et/ou fournit un lien pour celles-ci.

2. Système de traitement selon la revendication 1, dans lequel l'unité de détection (32) est une caméra et est montée au niveau de l'unité de manipulation (30).

3. Système de traitement selon l'une quelconque des revendications précédentes, **caractérisé en ce que** la première cellule de traitement (10) présente un dispositif de traitement (11) remplaçable, dans lequel un élément de repérage (200, 200') est monté au niveau de l'unité de traitement (11) interchangeable.

4. Système de traitement selon l'une quelconque des revendications précédentes, **caractérisé en ce que** l'élément de repérage (100, 100' ; 200, 200') fournit un point zéro comme information lisible sur un système de coordonnées dans l'espace, dans lequel il est préféré qu'un contour d'enveloppe/de collision d'un dispositif de traitement et/ou une ou plusieurs positions de traitement/de démarrage à l'intérieur de ce dispositif de traitement est/sont défini(es) sur la base du système de coordonnées.

5. Système de traitement selon l'une quelconque des revendications 1 à 4, **caractérisé en ce que** la cellule de traitement (10) comprend un dispositif de traitement pour le traitement par câble et/ou par contact, en particulier un dispositif de sertissage ou un dispositif de confection de conducteurs électriques et/ou optiques et/ou de combinaison de conducteurs et/ou de composants similaires au câble.

6. Système de traitement selon l'une quelconque des revendications 1 à 5, **caractérisé en ce que** la cellule de traitement (10, 20) présente plusieurs éléments de repérage (100, 100' ; 200, 200').

7. Système de traitement selon l'une quelconque des revendications précédentes, **caractérisé en ce que** l'élément de marquage (100a, 100a') fournit un système de coordonnées cartésiennes.

8. Système de traitement selon l'une quelconque des revendications précédentes, **caractérisé en ce que** l'élément de marquage comprend une pluralité d'éléments ponctuels.

9. Système de traitement selon la revendication 8, **caractérisé en ce que** les éléments ponctuels sont disposés le long de deux lignes imaginaires, dans lequel il est préféré que les lignes imaginaires s'étendent sensiblement perpendiculairement l'une à l'autre.

10. Système de traitement selon la revendication 8 ou la revendication 9, **caractérisé en ce que** les éléments ponctuels sont réalisés en forme de cercle, dans lequel il est préféré que les éléments ponctuels circulaires présentent sensiblement le même diamètre.

11. Système de traitement selon l'une quelconque des revendications précédentes, **caractérisé en ce que** l'élément de marquage (100a, 100a' ; 200, 200') est sélectionné à partir d'une ou de plusieurs sphères, une ou plusieurs tiges ou un ou plusieurs perçages.

12. Système de traitement selon l'une quelconque des revendications précédentes, **caractérisé en ce que** l'élément porteur d'informations (100b, 100b' ; 200b, 200b') est réalisé en forme de code QR, puce RFID ou code-barres.

13. Système de traitement selon l'une quelconque des revendications précédentes, **caractérisé en ce que** l'élément de repérage (100, 100') est réalisé en forme d'étiquette.

14. Système de traitement selon l'une quelconque des revendications précédentes, **caractérisé en ce que** l'élément de marquage (100a, 100a' ; 200a, 200a') s'étend de telle manière que l'élément de marquage (100a, 100a' ; 200a, 200a') enferme l'élément porteur d'informations (100b, 100b' ; 200b, 200b') au niveau d'au moins deux côtés de l'élément porteur d'informations (100b, 100b' ; 200b, 200b'), de préférence tous les côtés de l'élément porteur d'informations (100b, 100b' ; 200b, 200b').

15. Procédé de traitement d'un composant, en particulier d'une ligne électrique ou optique en utilisant le système de traitement selon l'une quelconque des revendications précédentes, comprenant les étapes suivantes :
la détection de l'élément de repérage (100, 100' ; 200, 200') prévu au niveau de la première cellule de traitement et/ou d'un dispositif de traitement de celle-ci qui comprend un élément de marquage (100a, 100a') ainsi qu'un élément porteur d'informations (100b, 100b'),
l'orientation de l'unité de manipulation (30) à l'aide d'un système de coordonnées défini par l'élément de marquage (100a, 100a') et la lecture d'une information fournie par l'élément porteur d'informations (100b, 100b'),
la remise des composants au moyen de l'unité de manipulation (10) à la première cellule de traitement.
